# EUROPEAN PATENT SPECIFICATION

(11) **EP 2 149 728 B1**
(45) Date of publication and mention of the grant of the patent: **27.06.2012**
(21) Application number: 08013701.1
(22) Date of filing: 30.07.2008
(51) Int. Cl.: F16H 61/04, F16H 61/688

(54) **Method of controlling a double clutch transmission**
Verfahren zur Steuerung eines Doppelkupplungsgetriebes
Procédé de contrôle d'une transmission à double embrayage

(43) Date of publication of application: 03.02.2010
(73) Proprietor: Hoerbiger Drivetrain Mechatronics B.V.B.A., 8210 Loppem (BE)
(72) Inventor: De Visscher, Nico, 9270 Laarne (BE)
(74) Representative: Kitzhofer, Thomas

(56) References cited:
- WO-A-2004/097266
- WO-A-2007/101418

## Description

The invention concerns a method of controlling a double clutch transmission according to the preamble part of claim 1 as well as a device for performing such a method.

WO 2004/097266 A1 shows such a method in a double clutch transmission.

Conventional double clutch shifts are performed as powershifts, meaning there is no torque interruption during the shift. This kind of shifting is comparable with full automatic transmission shifts and is a very comfortable way of shifting. To perform this kind of comfortable powershifts the incoming clutch needs to take over torque while the active clutch still transfers torque. The complete engine torque is brought to the wheels during the whole shift.

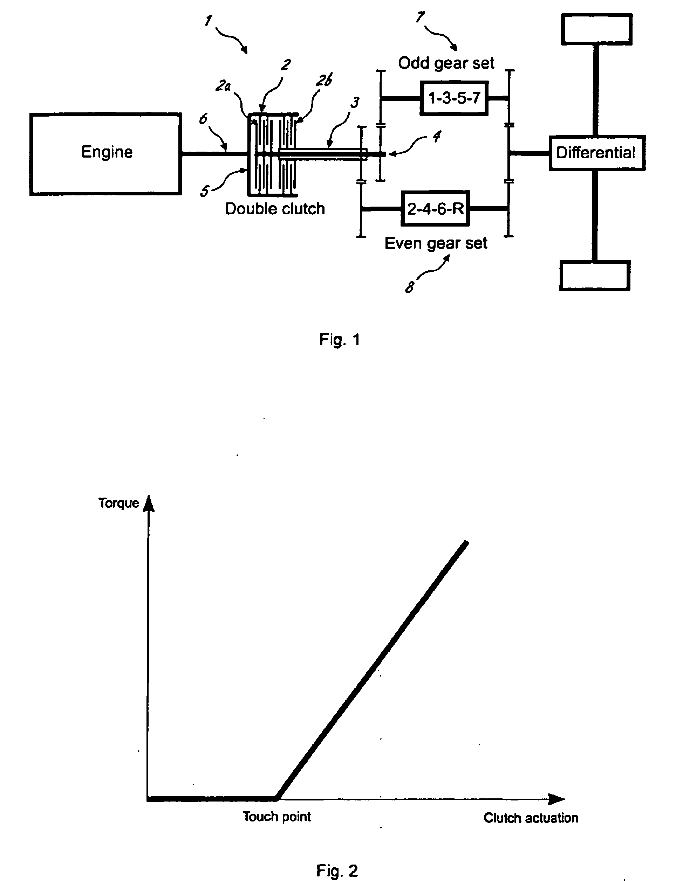

On the graph of Fig. 2 showing a simplified torque characteristic of the clutch, one can see that the touch point of the clutch needs to be reached before the clutch can control torque.

To perform powershifts the active clutch can only start to reduce its torque capacity when the incoming clutch is ready to (or already) transferring torque, this means that before the torque handover can start the incoming clutch must be prepared to take over torque. This preparation of the clutch has no effect on torque, meaning this is not noticeable for the driver. From driver's perspective this is only recognized as a delay to the real start of the shift.

It is therefore an object of the present invention to provide a method of controlling a double clutch transmission that is able to increase the responsiveness of such a double clutch transmission and the reaction of the car to a shift request that is equipped with such a transmission.

The solution of this object is achieved by the features of claim 1.

Further details, advantages and features of the present invention will become apparent from the following description of the drawings in which:
- Fig. 1: shows a block diagram of a double clutch transmission installed in a car,
- Fig. 2: shows a graph explaining the touch point of a clutch as used in a double clutch transmission,
- Fig. 3: shows a graph of the relation of an active clutch and an incoming clutch of the double clutch transmission during a shift,
- Fig. 4: shows a graph explaining a torque interruption in function of engine speed and throttle pedal position,
- Fig. 5: shows two graphs explaining the engine speed profile and the acceleration profile, and
- Fig. 6: shows a block diagram of a drive train equipped with a device according to the present invention.

Thus, according to the teaching of claim 1, the inventive method allows a DCT (Double Clutch Transmission) to have a gradual transition from very comfortable, nearly imperceptible shifting to a very responsive and fast shifting which gives the driver an immediate feedback and creates a strong, sporty driving experience.

Depending on the driving situation and the mode selected by the driver the amount of torque interruption can be adjusted to mach the correct balance between comfort and responsiveness in each driving condition.

Allowing a torque interrupt during the shift offers the ability to decrease both engine and active clutch torque while the incoming clutch is still not ready to transfer torque. The amount of torque interruption is a value for the anticipation of reducing engine and active clutch torque. Increasing the amount of torque interruption allows a faster reduction of engine and active clutch torque.

The main advantage of this torque interruption is increasing the responsiveness and the reaction of the car to a shift request. While powershifts are very comfortable, barely perceptible but rather slow, torque interruption shifts are very fast and responsive which gives the driver an immediate feedback to his request and creates a stronger, sportier driving experience.

This very fast and strong reaction of the car to a shift request ensures more driving fun.

Fig. 1 shows a Double Clutch Transmission (DCT) 1 comprising a double clutch 2 with a hollow shaft 3 and a central output shaft 4. The clutch housing 5 is connected to the engine crankshaft 6. Both clutches 2A, 2B of clutch 2 are controlled by hydraulic pistons (not shown) integrated into the clutch housing 5. The central and hollow shafts 4 and 3 are connected to two separate gear sets 7, 8 each with their own synchronizers (not shown). One shaft 4 drives the odd gear ratios while the other shaft 3 drives the even gear ratios. While one clutch 2A or 2B is active, meaning transferring the torque delivered by the engine, the other clutch remains open, meaning transferring no torque. With an open clutch the gears of this transmission half are not transferring torque and a new gear can be selected via the synchronizer actuators.

By alternately coupling the central and the hollow shaft - with the synchronizers selected the correct gear - shifts can be performed.

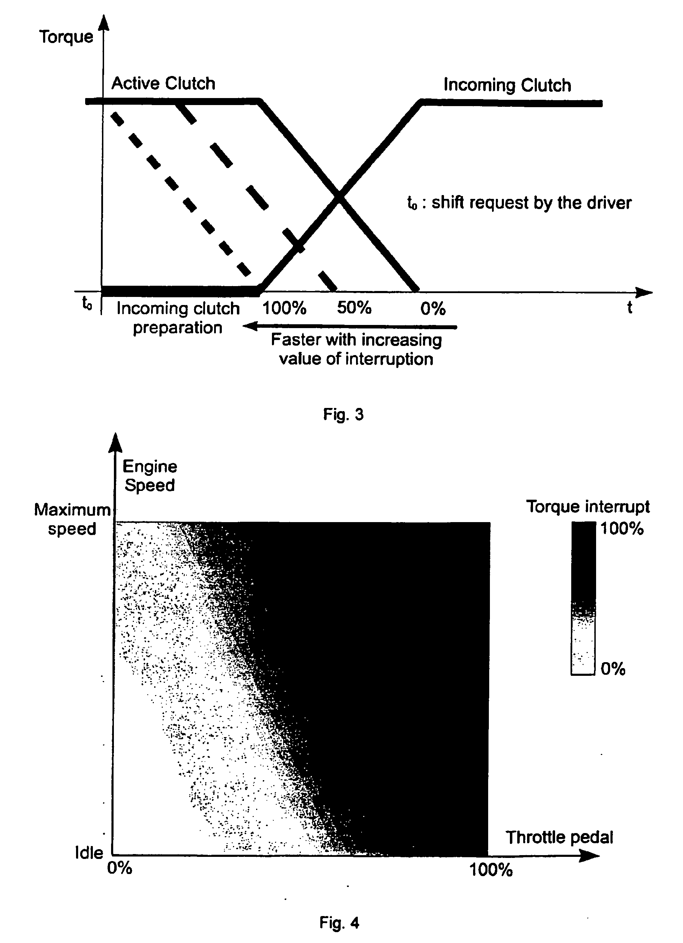

Fig. 3 is a graph showing the relation of the active and incoming clutch with to being the driver's shift request.

Depending on the driving situation and the driving mode selected by the driver the amount of torque interruption is continuously variable to mach the correct balance between comfort and responsiveness in each driving condition.

The graph of Fig. 4 shows an example of a calibration for the amount of torque interruption in function of engine speed and throttle pedal. In this example the torque interruption is increasing with increasing engine speed and throttle pedal position. Also other conditions such as longitudinal acceleration, lateral acceleration and gear ratio can be taken into account to determine the desired amount of torque interruption for each situation. In this way the car reacts different depending on the performance asked by the driver, it seems the car follows the driver's emotions and changes its behavior depending on the situation. In a low performance area where the driver is relaxed, the car reacts rather slow and very comfortable. In high performance conditions where the driver is fully focused on being fast, the car reacts very strong and very nervous like it was impatiently waiting for the shift request.

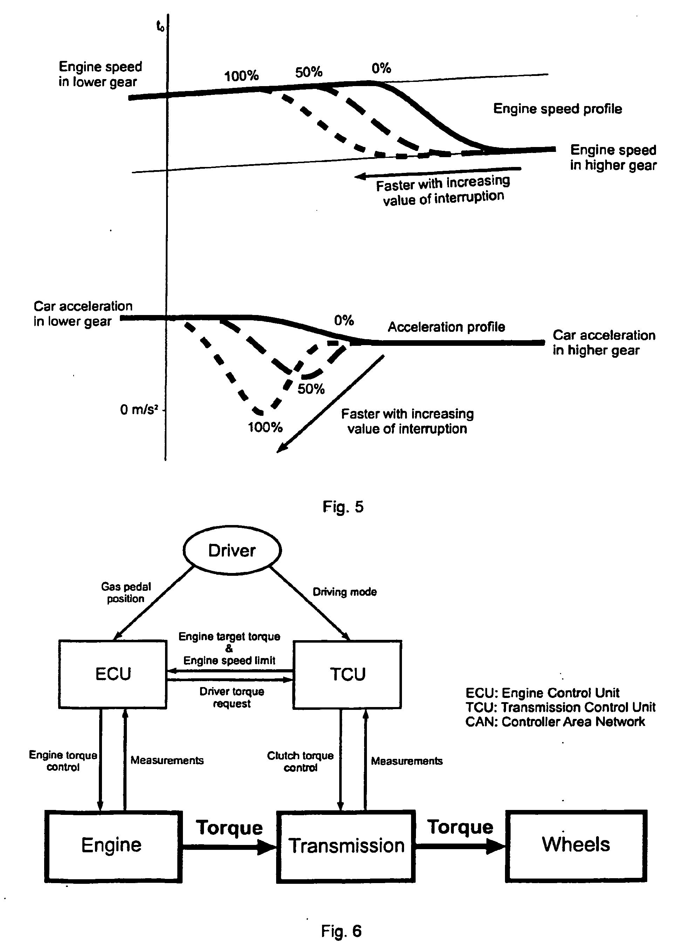

In the graph of Fig. 5 both engine speed and car acceleration are shown in function of the amount of torque interruption. The time to reach the final car acceleration can be calibrated shorter for torque interrupt shifts in comparison with powershifts. This shorter time is also visible in the time delay between shift request and start of engine speed decreasing. Looking at the car acceleration graph it becomes clear that the reaction of the car is very different. A powershift gives a very smooth profile while a torque interruption shift reduces the car acceleration for a very short time, this creates a big jerk being a change of acceleration in function of time.

The big jerk combined with the faster reaction puts emotion in the shift and creates the nervous reaction and the stronger and sportier driving experience.

In Fig. 6 a block diagram of a drive train is shown for illustrating the communication between an engine control unit ECU and a transmission control unit TCU.

To make the torque interruption shifts possible an extensive communication between the ECU and TCU (in both directions) is needed. The communication channel can be achieved with a CAN bus.

During shifts in general but especially during torque interruption shifts the ECU provides the driver torque demand to the TCU, which uses this to calculate both required engine and clutch torque to perform the shift.

The whished engine torque and engine speed limit is provided via the CAN bus to the ECU which will fulfill these requests. In this case the ECU reacts as a slave of the TCU which acts as master of torque control. There is no direct link between gas pedal position and engine target torque during shifting.

In addition to the written disclosure of the invention reference is herewith made explicitly to the disclosure thereof in the drawings according to Figs. 1 to 6.

### List of reference signs

- 1: double clutch transmission
- 2: double clutch
- 2A, 2B: clutches of double clutch 2
- 3: hollow shaft
- 4: central output shaft
- 5: clutch housing
- 6: crank shaft
- 7, 8: gear sets
- ECU: Engine Control Unit
- TCU: Transmission Control Unit
- CAN: Controller Area Network

## Claims

1. Method of controlling a double clutch transmission (1) of an engine, said transmission (1) comprising two clutches (2A, 2B) one of which that is transmitting engine torque being the active clutch whilst the other one constituting the incoming clutch,
where a torque interruption is created by decreasing engine torque and active clutch torque while keeping the incoming clutch inactive or preparing it to transfer torque, **characterised by**
the amount of torque interruption being continuously variable depending on the driving situation and/or the driving mode and
a calibration for the amount of torque interruption being performed as a function of at least one of the engine speed, throttle pedal position, longitudinal acceleration, lateral acceleration, gear ratio.

## Patentansprüche

1. Verfahren zur Steuerung eines Doppelkupplungsgetriebes (1) eines Motors, wobei das Getriebe (1) zwei Kupplungen (2A, 2B) umfasst, von denen eine, die ein Motordrehmoment überträgt, die aktive Kupplung ist, während die andere die Eingangskupplung bildet,
wobei eine Drehmomentunterbrechung geschaffen wird, indem das Motordrehmoment und das Drehmoment der aktiven Kupplung verringert werden, während die Eingangskupplung inaktiv gehalten oder auf die Drehmomentübertragung vorbereitet wird, **dadurch gekennzeichnet, dass**
der Betrag der Drehmomentunterbrechung je nach der Fahrsituation und/oder der Fahrbetriebsart stufenlos einstellbar ist und
eine Kalibrierung für den Betrag der Drehmomentunterbrechung in Abhängigkeit von der Motordrehzahl und/oder der Gaspedalposition und/oder der Längsbeschleunigung und/oder der Querbeschleunigung und/oder vom Übersetzungsverhältnis erfolgt.

## Revendications

1. Procédé de commande d'une boîte de vitesses (1) à double embrayage d'un moteur, la boîte de vitesses (1) comportant deux embrayages (2A, 2B), dont celui qui transmet un couple moteur est l'embrayage actif, tandis que l'autre constitue l'embrayage d'entrée,
une interruption de couple étant créée en diminuant le couple moteur et le couple de l'embrayage actif en maintenant l'embrayage d'entrée inactif ou en le préparant à transmettre un couple, **caractérisé en ce que**
le degré de l'interruption de couple est continuellement variable en fonction de la situation d'entraînement et/ou du mode d'entraînement, et
un calibrage pour le degré de l'interruption de couple est réalisé en fonction de la vitesse du moteur et/ou de la position de la pédale de l'accélérateur et/ou de l'accélération longitudinale et/ou de l'accélération latérale et/ou du rapport d'engrenage.
